# EUROPÄISCHE PATENTSCHRIFT

(11) **EP 3 727 642 B1**
(45) Veröffentlichungstag und Bekanntmachung des Hinweises auf die Patenterteilung: **29.04.2026**
(21) Anmeldenummer: 18815156.7
(22) Anmeldetag: 04.12.2018
(51) Int. Cl.: B01D 35/16, B01D 35/30, B01D 29/21

(54) **FILTER MIT EINEM ABLASSVERSCHLUSSELEMENT**
FILTER WITH A DISCHARGE CLOSURE ELEMENT
FILTRE AVEC UN ÉLÉMENT DE FERMETURE D'ÉCOULEMENT

(30) Priorität: 22.12.2017 DE 102017012016
(43) Veröffentlichungstag der Anmeldung: 28.10.2020
(73) Patentinhaber: MANN+HUMMEL GmbH, 71636 Ludwigsburg (DE)
(72) Erfinder: JAINEK, Herbert, 74074 Heilbronn (DE)
(74) Vertreter: Mann + Hummel Intellectual Property
(86) Internationale Anmeldenummer: PCT/EP2018/083454
(87) Internationale Veröffentlichungsnummer: WO 2019/120976

(56) Entgegenhaltungen:
- EP-A1- 3 249 184
- WO-A1-2013/178680
- DE-U1- 202007 017 980
- US-A- 3 322 280

## Beschreibung

### Technisches Gebiet

Die Erfindung betrifft einen Filter für Flüssigkeit, insbesondere Öl oder Kraftstoff, insbesondere einer Brennkraftmaschine, insbesondere eines Kraftfahrzeugs, mit wenigstens einem Filterelement mit einem Filtermedium, welches einen Elementinnenraum bezüglich einer gedachten Achse umfangsmäßig zusammenhängend umgibt und das an wenigstens einer bezüglich der Achse axialen Stirnseite mit einem Endkörper verbunden ist, wobei der Endkörper eine die Achse umgebende Filterelement-Leerlauföffnung, die mit dem Elementinnenraum verbunden ist, und wenigstens eine Filterelement-Dichtfläche oder Filterelement-Dichtungsfläche einer Filterelement-Dichteinrichtung aufweist, die die Filterelement-Leerlauföffnung umfangsmäßig zusammenhängend umgibt und mit der die Filterelement-Leerlauföffnung bei zusammengebautem Filter verschlossen werden kann.

Nicht erfindungsgemäß ist ein Ablassverschlusselement für wenigstens eine Ablassöffnung eines Filtergehäuses eines Filters für Flüssigkeit, insbesondere Öl oder Kraftstoff, insbesondere einer Brennkraftmaschine, insbesondere eines Kraftfahrzeugs, das wenigstens eine Dichtfläche einer Filterelement-Dichteinrichtung zum Verschließen einer Filterelement-Leerlauföffnung eines Filterelements des Filters aufweist, welche eine gedachte Achse umfangsmäßig zusammenhängend umgibt, wobei das Ablassverschlusselement bezüglich der Achse mittels einer Dreh- und/oder Steckbewegung mit dem Filterelement und/oder dem Filtergehäuse verbunden oder von diesem getrennt werden kann.

### Stand der Technik

US3322280 A zeigt einen Filter und Wasserabscheider für flüssige Brennstoffe mit einem Filterkopf und einem Einlassteil und einem Auslassteil für den Durchgang von Brennstoff vom Einlass in den Filterkopf in einen Filterbecher und weiter von außen nach innen durch einen Filter- oder Abscheidereinsatz hindurch und dann zum Auslass, wobei der Becher abnehmbar an dem Filterkopf angebracht ist, abgedichtet an ihm anliegt und von ihm nach unten ragt und dabei mit dem Einlasssteil in Verbindung steht und der Becher an seinem unteren Ende unterhalb des Filtereinsatzes zu einem Wassersammelbehälter mit einer Wasserablassöffnung ausgebildet ist.

Aus WO 2013/178680 A1 ist eine Filtereinrichtung, insbesondere für ein Kraftfahrzeug, mit einem Filtergehäuse, mit einem am Filtergehäuse befestigten Gehäusedeckel, welcher eine Gehäusedeckel-Leerlauföffnung aufweist, mit einem mit dem Gehäusedeckel verbindbaren oder verbundenen Filterelement, welches eine Filterelement-Leerlauföffnung aufweist und in einem in dem Filtergehäuse montierten Zustand im Filtergehäuse eine Rohseite von einer Reinseite trennt, mit einem an dem Gehäusedeckel anbringbaren oder angebrachten Verschlusselement, welches in einem an dem Gehäusedeckel angebrachten Zustand sowohl die Gehäusedeckel-Leerlauföffnung als auch die Filterelement-Leerlauföffnung verschließt, bekannt. Das Verschlusselement weist eine Radial-Dichtung auf, mittels welcher das Verschlusselement in dem an dem Gehäusedeckel angebrachten Zustand in der Filterelement-Leerlauföffnung die Rohseite gegen die Reinseite abdichtet.

Das Dokument DE 20 2007 017 980 U1 zeigt eine Filterpatrone für einen Ölfilter eines Verbrennungsmotors, wobei die Filterpatrone ein derart an ihr befestigtes Filterumgehungsventil aufweist, dass die Filterpatrone zusammen mit dem Filterumgehungsventil eine zum gemeinsamen Austausch vorgesehene Baueinheit bildet.

Die EP3249184 A1 offenbart eine Filterpatrone, umfassend mindestens ein Filterelement, das einen Fluidkanal mit einer ersten Längsachse bildet, eine vordere Endkappe, die abdichtend an einer Vorderseite des Filterelements befestigt ist, eine Leitung mit einem hinteren Ende und einem vorderen Ende, wobei die Leitung an der vorderen Endkappe befestigt ist, und ein Durchgangsloch in der vorderen Endkappe, wobei das Durchgangsloch eine Flüssigkeitsverbindung des Kanals mit der Leitung bereitstellt.

Der Erfindung liegt die Aufgabe zugrunde, einen Filter der eingangs genannten Art zu gestalten, bei denen eine Dichtung der Filterelement-Dichteinrichtung einfach ausgetauscht werden kann.

### Offenbarung der Erfindung

Die Aufgabe wird erfindungsgemäß bei dem Filter dadurch gelöst, dass die Filterelement-Dichteinrichtung wenigstens eine bezüglich der Achse umfangsmäßig zusammenhängende Dichtung aufweist, die aufseiten des Filterelements befestigt ist.

Erfindungsgemäß ist also die wenigstens eine Dichtung mit dem Filterelement verbunden. Auf diese Weise kann die wenigstens eine Dichtung gemeinsam mit dem Filterelement vorgefertigt und bei Bedarf ausgetauscht werden.

Vorteilhafterweise kann die wenigstens eine Dichtung elastisch sein. Auf diese Weise kann die Dichtung lagetoleranter eingebaut werden. Vorteilhafterweise kann die wenigstens eine Dichtung aus einem Elastomer sein.

Bei einer vorteilhaften Ausführungsform kann wenigstens eine Dichtung bezüglich der Achse radial und/oder axial dichtend wirken. Dabei kann die wenigstens eine Dichtung entweder radial oder axial oder sowohl radial als auch axial dichtend wirken. Radial wirkende Dichtungen können weitestgehend unabhängig von einer axialen Montagekraft zwischen den Bauteilen des Filters realisiert werden. Ausschließlich axial wirkende Dichtungen können abhängig von einer Montagekraft zwischen den Filterteilen mit einem entsprechend vergrößerten Dichtungsdruck beaufschlagt werden, wodurch die Dichtwirkung verbessert werden kann.

Bei einer weiteren vorteilhaften Ausführungsform kann wenigstens eine Dichtung auf einem hülsenartigen Positionierelement angeordnet sein, das sich auf der Außenseite des Endkörpers bezüglich der Achse axial erstreckt und das die Filterelement-Leerlauföffnung wenigstens mit bildet. Auf diese Weise kann die wenigstens eine Dichtung stabil gehalten werden. Ferner kann ein einziges Bauteil, nämlich das Positionierelement, sowohl zur Positionierung insbesondere des Filterelements relativ zum Gehäuse und/oder zu einem entsprechenden Ablassverschlusselement für wenigstens eine Ablassöffnung als auch als Halteelement für die wenigstens eine Dichtung dienen.

Bei einer weiteren vorteilhaften Ausführungsform kann wenigstens eine Dichtung bezüglich der Achse radial außen auf dem hülsenartigen Positionierelement angeordnet sein.

Auf diese Weise kann der Innenraum des Positionierelements durch die wenigstens eine Dichtung nicht beschränkt werden.

Vorteilhafterweise kann das Positionierelement an seiner radial äußeren Umfangsseite wenigstens eine Aufnahme, insbesondere eine umfangsmäßige Dichtungsnut, für die wenigstens eine Dichtung aufweisen. In der Aufnahme kann die wenigstens eine Dichtung verliersicher gehalten und positioniert werden.

Vorteilhafterweise kann das Positionierelement an seiner radial äußeren Umfangsseite eine bezüglich der Achse umfangsmäßige Dichtfläche zur Anlage der wenigstens einen Dichtung aufweisen. Auf diese Weise kann die Dichtung gegenüber dem Positionierelement in radialer Richtung dichtend wirken.

Alternativ kann das Positionierelement an der radial äußeren Umfangsseite umfangsmä-βig unterbrochene Positionierflächen aufweisen. Auf diese Weise kann die wenigstens eine Dichtung an der radial äußeren Umfangsseite des Positionierelements zwar anliegen, aber eine radiale Dichtung kann vermieden werden. In diesem Fall kann die wenigstens eine Dichtung so ausgestaltet sein, dass sie ausschließlich in axialer Richtung dichtend wirkt.

In einem weiteren Ausführungsbeispiel umfasst ein Endkörper des Filterelementes eine zusätzliche Hülse. Diese Hülse ist fest mit dem Endkörper verbunden, beispielsweise verrastet, verschweißt, verklebt oder auf eine andere Art fest verbunden. Eine solche Ausführung erleichtert die werkzeuggerechte Ausgestaltung des Endkörpers und der erforderlichen Dicht- und Dichtungsflächen, insbesondere bei einer Ausführung im Kunststoff-Spritzgussverfahren. Die zusätzliche Hülse kann dabei in axialer Richtung in den Endkörper des Filterelementes eingeschoben sein. Vorteilhaft ragt die zusätzliche Hülse innen im Filterelement in axialer Richtung über den Endkörper hinaus. Dadurch kann ein Widerlager, beispielsweise mit einem in Axialrichtung über die Öffnung radial überstehenden Rand, gebildet sein, das eine feste Verbindung der Hülse mit dem Endkörper ermöglicht. Die zusätzliche Hülse kann eine umfangsmäßig zusammenhängende Dichtungsnut aufweisen, in der eine Filterelementdichtung, beispielsweise eine O-Ring-Dichtung, aufgenommen ist und bei montiertem Filter in radialer Richtung dichtend wirkend an der Dichtfläche, ausgebildet von dem Ablassverschlusselement, anliegt und den Innenraum des Filterelementes gegen die Außenseite des Filterelementes abdichtet. Die Hülse kann in einer vorteilhaften Ausführung als hülsenförmiges, koaxiales Positionierelement ausgebildet sein. Der Endkörper kann in einer bauraumsparenden Ausbildung axial in das Filterelement eingezogen sein.

Vorteilhafterweise kann das Positionierelement radial außen von einer axial gerichteten Dichtfläche für die wenigstens eine Dichtung umgeben sein. Mit der axial gerichteten Dichtfläche kann wenigstens eine Dichtung axial dichtend zusammenwirken.

Ferner wird die technische Aufgabe erfindungsgemäß durch einen Filter mit einem Ablassverschlusselement dadurch gelöst, dass die wenigstens eine Dichtfläche von einer bezüglich der Achse axialen Stirnseite, welche zum Verschließen der wenigstens einen Ablassöffnung den Innenraum des Filtergehäuses zugewandt ist oder werden kann, in axialer Richtung frei zugänglich ist. Auf diese Weise kann eine entsprechende Dichtung der Filterelement-Dichteinrichtung von der axial gegenüberliegenden, also dem Innenraum des Filtergehäuses zugewandten, Seite in axialer Richtung mit der wenigstens einen Dichtfläche des Ablassverschlusselements in Verbindung gebracht werden. Entsprechend kann die Dichtfläche auch von der Dichtung getrennt werden. So kann das Ablassverschlusselement mit der entsprechenden Dreh- und/oder Steckbewegung von dem Filterelement wegbewegt werden, so dass die Filterelement-Leerlauföffnung und die Ablassöffnung freigegeben werden können.

Bei einer vorteilhaften Ausführungsform kann die wenigstens eine Dichtfläche bezüglich der Achse axial gerichtet sein. Auf diese Weise kann in Verbindung mit der entsprechenden Dichtung eine entsprechend ausschließlich axiale Dichtwirkung erzielt werden.

Bei einer weiteren vorteilhaften Ausführungsform kann die wenigstens eine Dichtfläche bezüglich der Achse radial innerhalb oder radial außerhalb eines Zentrierelements angeordnet sein, welches mit einem Positionierelement des Filterelements zusammenwirken kann. Das Zentrierelement kann dabei als Zentriervorsprung oder Zentrieröffnung ausgestaltet sein. Ein Zentriervorsprung kann in einer entsprechenden Öffnung, insbesondere der Filterelement-Leerlauföffnung, des Positionierelements des Filterelements zum Positionieren insbesondere des Filterelements eingreifen. In eine Zentrieröffnung kann ein insbesondere hülsenförmiges oder zapfenförmiges Positionierelement des Filterelements zum Positionieren eingreifen.

Bei einem Zentrierelement in Form einer Zentrieröffnung kann die Dichtfläche an der Umfangsseite der Zentrieröffnung angeordnet sein und nach radial innen gerichtet sein.

Bei einem Zentrierelement in Form eines Zentriervorsprungs kann die Dichtfläche den Zentriervorsprung radial außen umgeben.

Außerdem wird die technische Aufgabe bei dem Filter dadurch gelöst, dass ein Filterelement in dem Filtergehäuse angeordnet ist und die Filterelement-Leerlauföffnung sowie die Ablassöffnung mit einem Ablassverschlusselement verschlossen sind.

In einer vorteilhaften Ausführung sind das Positionierelement und das Ablassverschlusselement in axialer Richtung überlappend angeordnet, in der Art, dass wenigstens ein Bereich des Positionierelementes zumindest einen Bereich des Ablassverschlusselementes umfangsmäßig umschließt oder wenigstens ein Bereich des Ablassverschlusselementes zumindest einen Bereich des Positionierelementes umschließt.

Im Übrigen gelten die im Zusammenhang mit dem erfindungsgemäßen Filter und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch:
- Figur 1: einen Längsschnitt eines Filters für Flüssigkeit einer Brennkraftmaschine eines Kraftfahrzeugs gemäß einem ersten Ausführungsbeispiel;
- Figur 2: eine isometrische Detailansicht eines Gehäusedeckels des Filters aus Figur 1 im Bereich einer Ablassöffnung für die Flüssigkeit;
- Figur 3: eine isometrische Detailansicht eines beispielhaften Filterelements des Filters aus Figur 1 im Bereich einer Filterelement-Leerlauföffnung für die Flüssigkeit;
- Figur 4: einen Längsschnitt eines Teilbereiches eines Flüssigkeitsfilters gemäß einem zweiten, nicht erfindungsgemäßen Ausführungsbeispiel;
- Figur 5: einen Längsschnitt eines Teilbereiches eines Flüssigkeitsfilters gemäß einem dritten, nicht erfindungsgemäßen Ausführungsbeispiel.

In den Figuren sind gleiche Bauteile mit gleichen Bezugszeichen versehen.

### Ausführungsform(en) der Erfindung

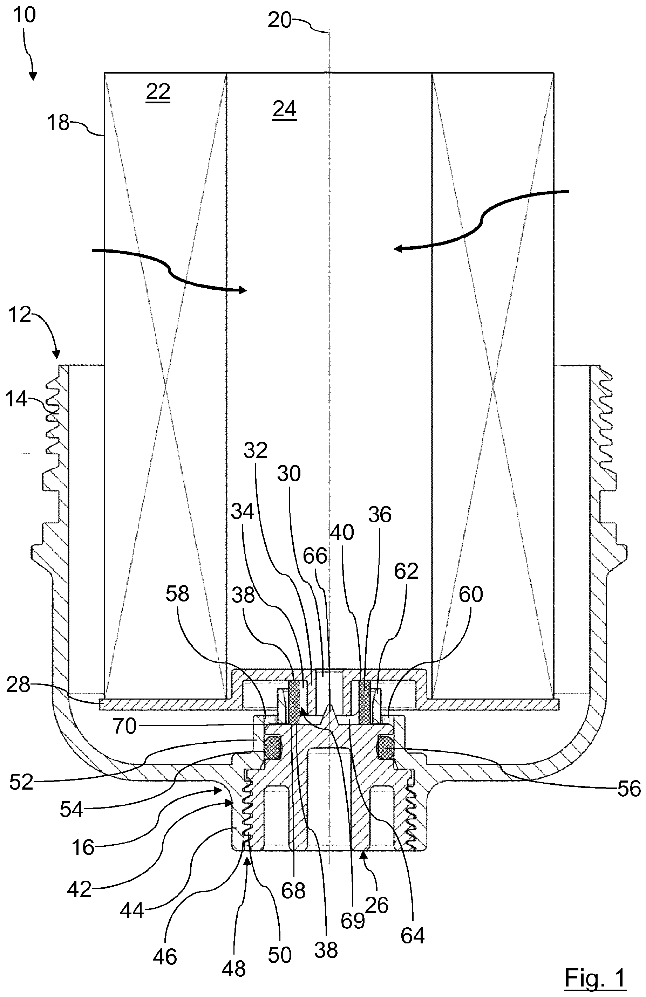

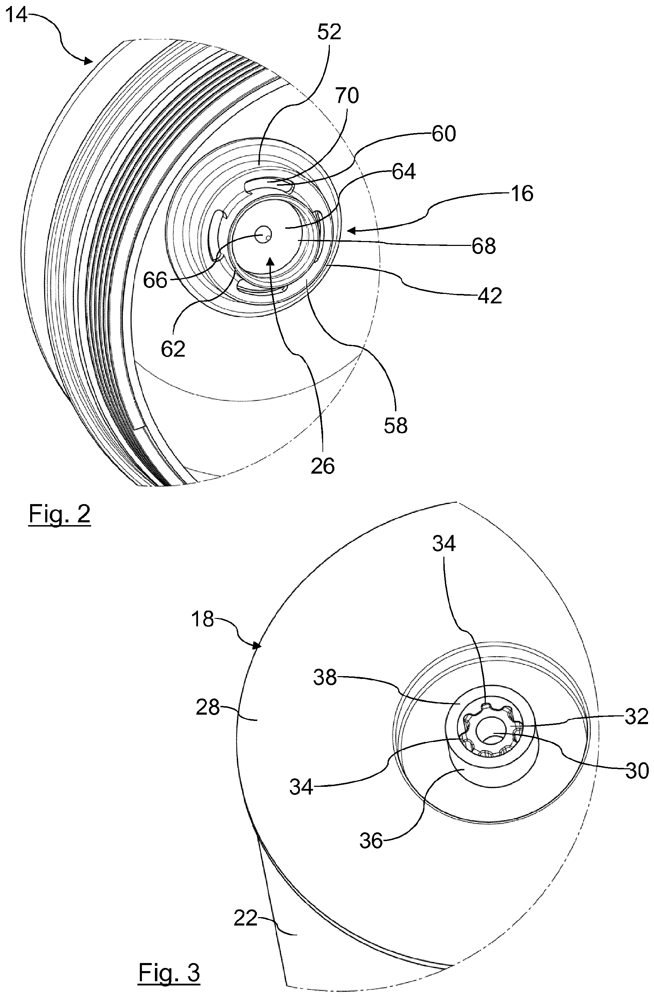

In Figuren 1 bis 3 ist ein Filter 10 für Flüssigkeit, beispielsweise Öl oder Kraftstoff, eine Brennkraftmaschine eines Kraftfahrzeuges gemäß einem ersten Ausführungsbeispiel in einem Längsschnitt und in Detailansichten gezeigt. Der Filter 10 ist in einem Flüssigkeitskreislauf, beispielsweise einem Motorölkreislauf oder einem Kraftstoffkreislauf, der Brennkraftmaschine angeordnet.

Der Filter 10 umfasst ein Filtergehäuse 12, von dem in Figur 1 lediglich der Gehäusedeckel 14 gezeigt ist. Der Gehäusedeckel 14 ist räumlich unten in ein nicht gezeigtes Hauptgehäuse des Filtergehäuses 12 eingeschraubt. Das Filtergehäuse 12 verfügt über einen Flüssigkeitseinlass für die zu reinigende Flüssigkeit und einen Flüssigkeitsauslass für gereinigte Flüssigkeit, welche beide in der Figur nicht gezeigt sind.

Ferner verfügt das Filtergehäuse 12 an der räumlich tiefsten Stelle des Gehäusedeckels 14 über eine Ablassanordnung 16, durch die Flüssigkeit aus dem Inneren des Filtergehäuses 12 beispielsweise zu Wartungszwecken, abgelassen werden kann. In dem Filtergehäuse 12 ist ein als Rundfilterelement ausgestaltetes Filterelement 18 so angeordnet, dass es den Flüssigkeitseinlass von dem Flüssigkeitsauslass trennt. Das Filterelement 18 ist in hier nicht weiter interessierender Weise an dem Gehäusedeckel 14 trennbar befestigt

Das Filterelement 18 weist ein bezüglich einer gedachten Achse 20 umfangsmäßig zusammenhängendes Filtermedium 22 auf, welches einen Elementinnenraum 24 umgibt. Beim Betrieb des Filters 10 wird das Filterelement 18 von radial außen nach radial innen mit der Flüssigkeit durchströmt, so dass der Elementinnenraum 24 die Reinseite des Filterelements 18 und der das Filterelement 18 umgebende Innenraum des Filtergehäuses 12 die Rohseite bildet.

Wenn im Folgenden von "axial", "radial", "koaxial", "umfangsmäßig" oder dergleichen die Rede ist, so bezieht sich dies, sofern nicht anders erwähnt, auf die Achse 20. Bei dem gezeigten Ausführungsbeispiel fällt die Achse 20 mit einer Elementachse des Filterelements 18, einer Einbauachse des Filterelements 18 in den Gehäusedeckel 14, einer Gehäuseachse des Filtergehäuses 12 und eine Verbindungsachse eines Ablassverschlusselements 26 der Ablassanordnung 16 mit dem Gehäusedeckel 14 zusammen. Daher wird der Einfachheit halber im Folgenden jeweils auf die Achse 20 Bezug genommen. Es versteht sich, dass bei demontiertem Filter 10 die Achse 20 den jeweils oben erwähnten Achsen entspricht.

An einer der Ablassanordnung 16 zugewandten, in Figur 1 unteren Stirnseite des Filterelements 18, ist eine Endscheibe 28 befestigt. Die Endscheibe 28 erstreckt sich über die gesamte Stirnseite des Filterelements 18. Im Bereich des Elementinnenraums 24 ist die Endscheibe 28 zum Elementinnenraum 24 hin axial abgestuft. Dort verfügt die Endscheibe 28 über eine koaxiale Filterelement-Leerlauföffnung 30.

Die Filterelement-Leerlauföffnung 30 wird auf der dem Elementinnenraum 24 axial abgewandten Außenseite der Endscheibe 28 in einem Positionierelement 32 gebildet.

Das Positionierelement 32 hat die Form einer Hülse, welche an ihrer radial inneren Umfangsseite kreiszylindrisch ist. An der radial äußeren Umfangsseite ist das Positionierelement 32 gezahnt und bildet so radial außen eine Vielzahl von umfangsmäßig zueinander beabstandeten Positionierabschnitten 34 für eine Filterelement-Dichtung 36. Die Positionierabschnitte 34 erstrecken sich jeweils parallel zur Achse 20.

Die Filterelement-Dichtung 36 ist als Hülse in Form eines kreisförmigen Hohlzylinders ausgestaltet, welche koaxial angeordnet ist. Mit ihrer radial inneren Umfangsseite liegt die Filterelement-Dichtung 36 nicht radial dichtend, mit umfangsmäßigen Unterbrechungen an den jeweiligen Positionierabschnitten 34 an und wird so positioniert.

An ihren axial gegenüberliegenden Stirnseiten weist die Filterelement-Dichtung 36 jeweils eine Filterelement-Dichtungsfläche 38 auf. Die Filterelement-Dichtungsflächen 38 sind jeweils ausschließlich axial gerichtet. Die Filterelement-Dichtung 36 weist daher keine in radialer Richtung wirkende Dichtfläche auf.

Die Filterelement-Dichtung 36 überragt das Positionierelement 32 in axialer Richtung. Die Filterelement-Dichtung 36 ist aus einem Elastomer und in axialer Richtung elastisch.

Mit ihrer dem Elementinnenraum 24 axial zugewandten Filterelement-Dichtungsfläche 38 liegt die Filterelement-Dichtung 36 in axialer Richtung dichtend wirkend an einer Filterelement-Dichtfläche 40 an. Die Filterelement-Dichtfläche 40 umgibt das Positionierelement 32 radial außen umfangsmäßig zusammenhängend auf der dem Elementinnenraum 24 axial abgewandten Außenseite der Endscheibe 28. Die Filterelement-Dichtfläche 40 ist ebenfalls ausschließlich in axialer Richtung gerichtet.

Die Ablassanordnung 16 umfasst das Ablassverschlusselement 26 und eine Aufnahme 42 für das Ablassverschlusselement 26, die sich im räumlich unteren Teil des Gehäusedeckels 14 befindet. Die Aufnahme 42 ist insgesamt einstückig mit dem Gehäusedeckel 14 ausgebildet.

Die Aufnahme 24 umfasst einen koaxialen Verbindungsabschnitt 44 in Form einer kreiszylindrischen Hülse an der Außenseite des Gehäusedeckels 14. An seiner radial inneren Umfangsseite verfügt der Verbindungsabschnitt 44 über ein Innengewinde 46 einer Schraubverbindung 48, welches mit einem entsprechenden Außengewinde 50 an der radial äußeren Umfangsseite des Ablassverschlusselements 26 zusammenwirkt.

Auf der dem Filterelement 18 axial zugewandten Innenseite des Gehäusedeckels 14 weist die Aufnahme 42 einen koaxialen Dichtabschnitt 52 in Form eines hohlen Kreiszylinders auf. Der Dichtabschnitt 52 bildet an seiner radial inneren Umfangsseite eine Umgebungs-Dichtfläche 54, welche nach radial innen gerichtet ist. An der Umgebungs-Dichtfläche 54 liegt ein Umgebungsdichtring 56 in radialer Richtung dichtend wirkend an. Der Umgebungsdichtring 56 ist in einer Dichtungsnut in der radial äußeren Umfangsseite des Ablassverschlusselements 26 angeordnet.

Auf der dem Boden des Gehäusedeckels 14 axial abgewandten Seite ist der Dichtabschnitt 52 um 90° nach radial innen gebogen und bildet dort eine Stirnwand 58. In der Stirnwand 58 sind umfangsmäßig verteilt mehrere radial äußere Ablassöffnungen 60 angeordnet.

Radial innerhalb der radial äußeren Ablassöffnungen 60 ist die Stirnwand 58 um 90° vom Boden des Gehäusedeckels 14 gebogen und geht in einen Trennabschnitt 62 über. Der Trennabschnitt 62 hat die Form eines koaxialen hohlen Kreiszylinders. Der Trennabschnitt 62 bildet so eine umfangsmäßig zusammenhängende Trennwand. Der Trennabschnitt 62 umgibt eine koaxiale radial innere Ablassöffnung 64. Der Trennabschnitt 62 trennt so die radial äußeren Ablassöffnungen 60 von der radial inneren Ablassöffnung 64.

Im Bereich seines der Stirnwand 58 axial abgewandten Randes ist der Trennabschnitt 62 an der radial inneren Umfangsseite trichterartig aufgeweitet. Eine axiale Ausdehnung des Trennabschnitts 62 ist kleiner als eine axiale Ausdehnung der Filterelement-Dichtung 36 in entspanntem Zustand. Bei einer axialen Kompression der Filterelement-Dichtung 36 kann der Trennabschnitt 62 als Anschlag dienen. Ein Innendurchmesser des Trennabschnitts 62 ist größer als ein Außendurchmesser der Filterelement-Dichtung 36. Bei montiertem Filterelement 18 umgibt der Trennabschnitt 62 die Filterelement-Dichtung 36, ohne diese zu berühren. Auf diese Weise findet keine radiale Dichtwirkung zwischen dem Trennabschnitt 62 und der Filterelement-Dichtung 36 statt.

Die dem Innenraum des Filtergehäuses 12 axial zugewandte Stirnseite des Ablassverschlusselements 26 verläuft eben und senkrecht zur Achse 20. In ihrem Zentrum weist die Stirnseite ein konisches koaxiales Zentrierelement 66 auf. Der maximale Außendurchmesser des Zentrierelements 66 ist kleiner als der Innendurchmesser der Filterelement-Leerlauföffnung 30. Das Zentrierelement 66 kann so in die Filterelement-Leerlauföffnung 30 eingreifen, um das Filterelement 18 entsprechend zu zentrieren.

Radial außerhalb des Zentrierelements 66 bildet die Stirnseite des Ablassverschlusselements 26 eine umfangsmäßig zusammenhängende Dichtfläche 68. Die Dichtfläche 68 entspricht in ihrem Durchmesser und ihrer radialen Ausdehnung der entsprechend zugewandten, räumlich unteren Filterelement-Dichtungsfläche 38 der Filterelement-Dichtung 36. Die Dichtfläche 68 ist ausschließlich in axialer Richtung gerichtet. Die Filterelement-Dichtungsfläche 38 der Filterelement-Dichtung 36 liegt bei montiertem Filter 10 ausschließlich in axialer Richtung dichtend wirkend an der Dichtfläche 68 an.

Die Filterelement-Dichtung 36, die Filterelement-Dichtungsflächen 38, die Filterelement-Dichtfläche 40 und die Dichtfläche 68 bilden eine Filterelement-Dichteinrichtung 69.

Radial außerhalb der Dichtfläche 68 bildet die Stirnseite des Ablassverschlusselements 26 eine ringförmige Abdeckfläche 70, mit welcher bei montiertem Filter 10 die radial äußeren Ablassöffnungen 60 abgedeckt und verschlossen werden.

Ein radial äußerer Durchmesser der Stirnseite des Ablassverschlusselements 26 entspricht einem radial inneren Durchmesser des Dichtabschnitts 52 der Aufnahme 42.

Mit der Filterelement-Dichtung 36 wird die Reinseite des Filterelements 18 von der Rohseite getrennt. Der Trennabschnitt 62 und in Kombination mit der labyrinthartigen Anordnung der Vertiefung der Endscheibe 28 verhindern, dass Grobschmutz, beispielsweise Späne, von der Rohseite in den Bereich der Filterelement-Dichtung 36 gelangen und deren Dichtwirkung beeinträchtigen kann.

Zum Ablassen der Flüssigkeit aus dem Filter 10, beispielsweise zu Wartungszwecken, wird das Ablassverschlusselement 26 aus der Aufnahme 42 herausgeschraubt. Dabei gibt die Filterelement-Dichtung 36 auf der der Dichtfläche 68 zugewandten Seite die Verbindung zwischen der Filterelement-Leerlauföffnung 30 und der radial inneren Ablassöffnung 64 frei, so dass Flüssigkeit von der Reinseite ablaufen kann.

Außerdem gibt die Abdeckfläche 70 die radial äußeren Abflussöffnungen 60 frei, so dass die Flüssigkeit von der Rohseite durch die radial äußeren Ablassöffnungen 60 ablaufen kann.

Außerdem gibt die Abdeckfläche 70 die radial äußeren Abflussöffnungen 60 frei, so dass die Flüssigkeit von der Rohseite durch die radial äußeren Ablassöffnungen 60 ablaufen kann.

Das Positionierelement 32 und das Ablassverschlusselement 26 mit dem Trennabschnitt 62 sind in der gezeigten Ausführung in axialer Richtung überlappend angeordnet. Ein Bereich des Ablassverschlusselementes 62, in Gestalt des Trennabschnitts 62, umschließt einen Bereich des Positionierelementes 32. Das Positionierelement 32 taucht im Bereich des Trennabschnitts 62 zumindest teilweise in das das Positionierelement 32 radial umgebende Ablassverschlusselement 62 ein.

Zum Austausch des Filterelementes 18 wird der Gehäusedeckel 14 aus dem Gehäusegrundkörper herausgeschraubt. Anschließend kann das Filterelement 18 mitsamt der Filterelement-Dichtung 36 aus dem Gehäusedeckel 14 in axialer Richtung herausgezogen werden und ausgetauscht werden.

Der Zusammenbau des Filters 10 erfolgt in umgekehrter Richtung.

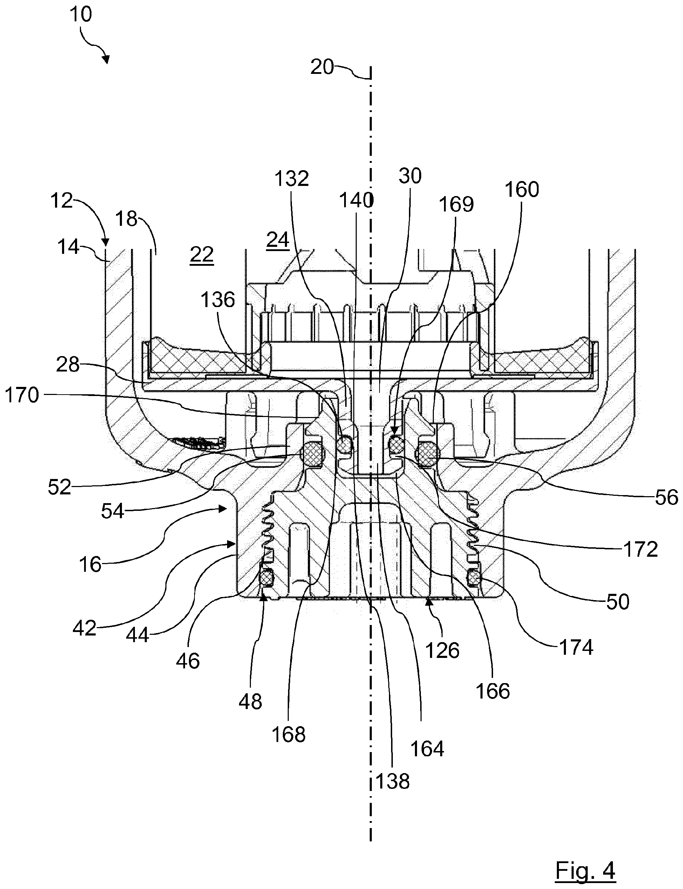

In Figur 4 ist ein Filter 10 gemäß einem zweiten, nicht erfindungsgemäßen Ausführungsbeispiel gezeigt. Diejenigen Elemente, die zu denen des ersten Ausführungsbeispiels aus Figuren 1 bis 3 ähnlich sind, sind mit denselben Bezugszeichen versehen.

Das zweite Ausführungsbeispiel unterscheidet sich von dem ersten Ausführungsbeispiel dadurch, dass eine Filterelementdichtung 136 in Form einer O-Ring-Dichtung in radialer Richtung dichtend wirkt. Die Filterelement-Dichtung 136 ist in einer umfangsmäßig zusammenhängenden Dichtungsnut 172 an einer radial äußeren Umfangsseite eines hülsenförmigen koaxialen Positionierelementes 132 angeordnet. Das Positionierelement 132 weist im Unterschied zu dem Positionierelement 32 aus dem ersten Ausführungsbeispiel keine unterbrochenen Positionierabschnitte auf.

Ein Grund der Dichtungsnut 172 bildet eine radial gerichtete Filterelement-Dichtfläche 140. Die entsprechende radial innere Umfangsseite der Filterelement-Dichtung 136 bildet eine radial innere Dichtungsfläche 138. Die radial innere Filterelement-Dichtungsfläche 138 ist radial gerichtet und liegt in radialer Richtung dichtend an der Filterelement-Dichtfläche 140 an.

Auf der dem Filterelement 18 axial zugewandten Stirnseite weist das Ablassverschlusselement 126 im Dichtabschnitt 52 ein Zentrierelement 166 in Form einer koaxialen kreiszylindrischen Zentrieröffnung auf. Im Bereich seiner offenen, dem Filterelement 18 zugewandten Seite ist das Zentrierelement 166 trichterförmig aufgeweitet.

Die radial innere Umfangsseite des Dichtabschnitts 52, welche das Zentrierelement 166 umgibt, bildet eine Dichtfläche 168. Die Dichtfläche 168 ist nach radial innen gerichtet. An der Dichtfläche 168 liegt die radial äußere Filterelement-Dichtungsfläche 138, welche sich an der radial äußeren Umfangsseite der Filterelement-Dichtung 136 befindet, in radialer Richtung dichtend an.

Die Filterelement-Dichtung 136, die Filterelement-Dichtungsflächen 138, die Filterelement-Dichtfläche 140 und die Dichtfläche 168 bilden eine Filterelement-Dichteinrichtung 169.

Ein Außendurchmesser des Positionierelementes 132 entspricht etwa dem Durchmesser des Zentrierelementes 166. Das Zentrierelement 166 erstreckt sich in axialer Richtung bis etwa auf Höhe der Umfangsnut mit dem Umgebungsdichtring 56.

Auf die Stirnwand 58 und den Trennabschnitt 62 gemäß dem ersten Ausführungsbeispiel wird bei der Aufnahme 42 des Gehäusedeckels 14 gemäß dem zweiten Ausführungsbeispiel verzichtet. Stattdessen erstreckt sich eine radial äußere Ablassöffnung 160 zusammenhängend umfangsmäßig und wird durch das Positionierelement 132 von einer radial inneren Ablassöffnung 164 getrennt. Bei entferntem Filterelement 18 und entferntem Ablassverschlusselement 126 bilden die radial äußere Ablassöffnung 160 und die radial innere Ablassöffnung 164 eine einzige zusammenhängende Öffnung.

Bei montiertem Ablassverschlusselement 126 wird die radial äußere Ablassöffnung 160 durch eine umfangsmäßig zusammenhängende, schräge Abdeckfläche 170 verschlossen. Abdeckfläche 170 ist an der radial äußeren Umfangsseite des Ablassverschlusselementes 126 angeordnet. Die Abdeckfläche 170 befindet sich in axialer Richtung betrachtet zwischen der dem Filterelement 18 zugewandten Stirnseite des Ablassverschlusselementes 126 und der der Umfangsnut mit dem Umgebungsdichtring 56. Die Aufnahme 42 für das Ablassverschlusselement 126 ist auf der dem Innenraum des Filtergehäuses 12 zugewandten Seite zumindest radial innen koaxial zylindrisch geformt.

Optional weist das Ablassverschlusselement 126 auf der der Umfangsnut mit dem Umgebungsdichtring 56 axial abgewandten Seite des Außengewindes 50 eine Außendichtung 174 in Form einer koaxialen O-Ring-Dichtung auf. Die Außendichtung 174 ist in einer entsprechenden umfangsmäßig zusammenhängenden Dichtungsnut in der radial äußeren Umfangsseite des Ablassverschlusselementes 126 angeordnet. Die Außendichtung 174 dichtet in radialer Richtung gegen eine entsprechende Dichtfläche an der radial inneren Seite des Verbindungsabschnitts 44 zur Umgebung hin ab. Bei einer Erstmontage des Ablassverschlusselementes 126 in dem Gehäuse 14 kann auf die Außendichtung 174 verzichtet werden. Erst nach einer erstmaligen Entfernung des Ablassverschlusselementes 26 und anschließendem wieder Einschrauben kann optional die Außendichtung 174 mit eingebracht werden, um die Schraubverbindung 48 zur Umgebung hin besser abzudichten.

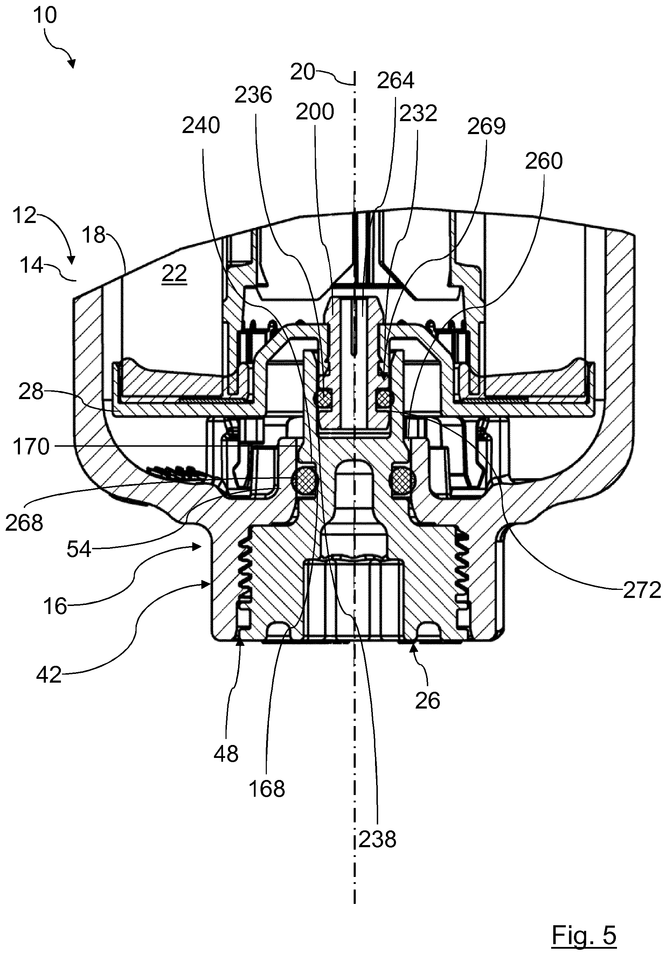

In Figur 5 ist ein Filter 10 gemäß einem dritten, nicht erfindungsgemäßen Ausführungsbeispiel gezeigt. Diejenigen Elemente, die zu denen des ersten Ausführungsbeispiels aus den Figuren 1 bis 4 ähnlich sind, sind mit denselben Bezugszeichen versehen, ähnliche Elemente mit einem um 200 erhöhten Bezugszeichenzahl bezeichnet.

Das dritte Ausführungsbeispiel unterscheidet sich von dem zweiten Ausführungsbeispiel dadurch, dass ein Endkörper 28 des Filterelementes 18 eine zusätzliche Hülse 200 umfasst. Diese Hülse 200 ist fest mit dem Endkörper 28 verbunden, beispielsweise verrastet, und bildet eine Ablassöffnung 264.

Eine Filterelementdichtung 236 in Form einer O-Ring-Dichtung ist in der Hülse 200 aufgenommen und wirkt in radialer Richtung. Durch die separate Herstellung der Hülse 200 ist das Filterelement 12, insbesondere die Endkörper 28 einfacher und günstiger herzustellen, da der Endkörper 28 in einer Entformungsrichtung, beispielsweise im Spritzgussverfahren, hergestellt werden kann.

Eine Filterelement-Dichtung 236 ist in einer umfangsmäßig zusammenhängenden Dichtungsnut 272 an einer radial äußeren Umfangsseite der Hülse 200 angeordnet, wobei die Hülse 200 als hülsenförmiges koaxiales Positionierelement 232 ausgebildet ist. Das Positionierelement 232 weist im Unterschied zu dem Positionierelement 32 aus dem ersten Ausführungsbeispiel keine unterbrochenen Positionierabschnitte auf. Die entsprechende radial innere Umfangsseite der Filterelement-Dichtung 236 bildet eine radial innere Dichtungsfläche 238.

Der Endkörper kann in einer bauraumsparenden Ausbildung axial in das Filterelement 18 eingezogen sein.

Die Zentrierung und Positionierung der dritten Ausführung der Fig. 5 erfolgt entsprechend der zweiten Ausführung nach Fig. 4.

## Patentansprüche

1. Filter (10) für Flüssigkeit, insbesondere Öl oder Kraftstoff, insbesondere einer Brennkraftmaschine, insbesondere eines Kraftfahrzeugs, mit wenigstens einem Filtergehäuse (12), in dem ein Filterelement (18) angeordnet ist, wobei das Filterelement (18) wenigstens eine Filterelement-Leerlauföffnung (30) und das Filtergehäuse (12) eine Ablassöffnung (60, 64) für Flüssigkeit aufweist, die mit einem Ablassverschlusselement (26) verschlossen sind, wobei das Filterelement (18) wenigstens ein Filtermedium (22) aufweist, welches einen Elementinnenraum (24) bezüglich einer gedachten Achse (20) umfangsmäßig zusammenhängend umgibt und das an wenigstens einer bezüglich der Achse (20) axialen Stirnseite mit einem Endkörper (28) verbunden ist, wobei der Endkörper (28) des Filterelementes (18) eine die Achse (20) umgebende Filterelement-Leerlauföffnung (30), die mit dem Elementinnenraum (24) verbunden ist, und wenigstens eine Filterelement-Dichtfläche oder Filterelement-Dichtungsfläche (38, 40, 68) einer Filterelement-Dichteinrichtung (69) aufweist, die die Filterelement-Leerlauföffnung (30) umfangsmäßig zusammenhängend umgibt und mit der die Filterelement-Leerlauföffnung (30) bei zusammengebautem Filter (10) verschlossen werden kann, wobei die Filterelement-Dichteinrichtung (69) wenigstens eine bezüglich der Achse (20) umfangsmäßig zusammenhängende Dichtung (36) aufweist, die aufseiten des Filterelementes (18) befestigt, ist und die Filterelement-Leerlauföffnung (30) und die Ablassöffnung (60, 64) mit einem Ablassverschlusselement (26) verschlossen sind, wobei das Ablassverschlusselement (26) für wenigstens eine Ablassöffnung (60, 64) des Filtergehäuses (12) des Filters (10) wenigstens eine Dichtfläche (68) der Filterelement-Dichteinrichtung (69) zum Verschließen der Filterelement-Leerlauföffnung (30) des Filterelementes (18) des Filters (10) aufweist, welche eine gedachte Achse (20) umfangsmäßig zusammenhängend umgibt, wobei das Ablassverschlusselement (26) bezüglich der Achse (20) mittels einer Dreh- und/oder Steckbewegung mit dem Filterelement (18) und/oder dem Filtergehäuse (12) verbunden oder von diesem getrennt werden kann, **dadurch gekennzeichnet, dass** die wenigstens eine Dichtfläche (68) von einer bezüglich der Achse (20) axialen Stirnseite, welche zum Verschließen der wenigstens einen Ablassöffnung (60, 64;) dem Innenraum des Filtergehäuses (12) zugewandt ist oder werden kann, in axialer Richtung frei zugänglich ist.

2. Filter (10) für Flüssigkeit nach Anspruch 1, **dadurch gekennzeichnet, dass** eine axiale Ausdehnung eines Trennabschnitts (62) kleiner ist als eine axiale Ausdehnung einer Filterelement-Dichtung (36) in entspanntem Zustand, wobei bei einer axialen Kompression der Filterelement-Dichtung (36) der Trennabschnitt (62) als Anschlag dient, wobei der Innendurchmesser des Trennabschnitts (62) größer ist als der Außendurchmesser der Filterelement-Dichtung (36).

3. Filter (10) für Flüssigkeit nach Anspruch 1 oder 2, **dadurch gekennzeichnet, dass** ein Positionierelement (32) und das Ablassverschlusselement (26) in montiertem Zustand in axialer Richtung überlappend angeordnet, wobei ein Bereich des Ablassverschlusselementes (26) einen Bereich des Positionierelementes (32) umschließt oder ein Bereich des Positionierelementes (32) einen Bereich des Ablassverschlusselementes (26) umschließt.

4. Filter (10) nach einem der vorherigen Ansprüche, **dadurch gekennzeichnet, dass** die wenigstens eine Dichtung (36) der Filterelement-Dichteinrichtung (69) des Filterelementes (18) bezüglich der Achse (20) axial dichtend wirkt.

5. Filter (10) nach einem der vorherigen Ansprüche, **dadurch gekennzeichnet, dass** die wenigstens eine Dichtung (36) der Filterelement-Dichteinrichtung (69) des Filterelementes (18) auf einem hülsenartigen Positionierelement (32) angeordnet ist, das sich auf der Außenseite des Endkörpers (28) bezüglich der Achse (20) axial erstreckt und das die Filterelement-Leerlauföffnung (30) wenigstens mit bildet.

6. Filter (10) nach einem der vorherigen Ansprüche, **dadurch gekennzeichnet, dass** wenigstens eine Dichtung (36) des Filterelementes (18) bezüglich der Achse (20) radial außen auf dem hülsenartigen Positionierelement (32) angeordnet ist.

7. Filter (10) nach einem der vorherigen Ansprüche, **dadurch gekennzeichnet, dass** das die wenigstens eine Dichtfläche (68) des Ablassverschlusselementes (26) bezüglich der Achse (20) axial gerichtet ist.

8. Filter (10) nach einem der vorherigen Ansprüche, **dadurch gekennzeichnet, dass** die wenigstens eine Dichtfläche (68) des Ablassverschlusselementes (26) bezüglich der Achse (20) radial innerhalb oder radial außerhalb eines Zentrierelementes (66) angeordnet ist, welches mit einem Positionierelement (32) des Filterelementes (18) zusammenwirken kann.

9. Filter (10) nach einem der vorherigen Ansprüche, **dadurch gekennzeichnet, dass** mittels einer Abdeckfläche (70) des Ablassverschlusselementes (26) radial äußere Abflussöffnungen (60) verschließbar oder öffenbar sind, so dass eine Flüssigkeit durch radial äußere Ablassöffnungen (60) am Boden eines Gehäusedeckels (14) ablaufen kann.

## Claims

1. A filter (10) for liquid, in particular oil or fuel, in particular of an internal combustion engine, with at least one filter housing (12) in which a filter element (18) is disposed, wherein the filter element (18) features at least one filter element idle opening (30) and the filter housing (12) features a discharge opening (60, 64) for liquid, which are closed by a discharge closure element (26), wherein the filter element (18) features at least one filter medium (22) which circumferentially surrounds an element interior (24) with respect to an imaginary axis (20) and is connected to an end body (28) at at least one axial front face with respect to the axis (20), wherein the end body (28) of the filter element (18) features a filter element idle opening (30) surrounding the axis (20), which is connected to the element interior space (24), and at least one filter element sealing surface or filter element seal surface (38, 40, 68) of a filter element sealing device (69) which circumferentially surrounds the filter element idle opening (30) continuously and with which the at least one filter element idle opening (30) can be closed when the filter (10) is assembled, wherein the filter element sealing device (69) features at least one seal (36) that is circumferentially continuous with respect to the axis (20), the seal being attached to the filter element (18), and closes the filter element idle opening (30) and the discharge opening (60, 64) with a discharge closure element (26), wherein the discharge closure element (26) features for at least one discharge opening (60, 64) of the filter housing (12) of the filter (10) at least one sealing surface (68) of the filter element sealing device (69) for closing the filter element idle opening (30) of the filter element (18) of the filter (10), which surrounds an imaginary axis (20) circumferentially in a continuous manner, wherein the discharge closure element (26) can be connected to or disconnected from the filter element (18) and/or the filter housing (12) relative to the axis (20) by means of a rotary and/or plug-in movement, **characterized in that** the at least one sealing surface (68) is freely accessible in the axial direction from an axial front face with respect to the axis (20) and that faces or can face the interior space of the filter housing (12) for closing the at least one discharge opening (60, 64).

2. The filter (10) for liquid according to claim 1, **characterized in that** an axial extension of a separating section (62) is smaller than an axial extension of a filter element seal (36) in a relaxed state, wherein, upon axial compression of the filter element seal (36), the separating section (62) serves as a stop, wherein the internal diameter of the separating section (62) is greater than the external diameter of the filter element seal (36).

3. The filter (10) for liquid according to claim 1 or 2, **characterized in that** a positioning element (32) and the discharge closure element (26) are disposed in an overlapping in the axial direction in the assembled state, wherein a region of the discharge closure element (26) encloses a region of the positioning element (32) or a region of the positioning element (32) encloses a region of the discharge closure element (26).

4. The filter (10) according to one of the preceding claims, **characterized in that** the at least one seal (36) of the filter element sealing device (69) of the filter element (18) acts as an axial seal with respect to the axis (20).

5. The filter (10) according to one of the preceding claims, **characterized in that** the at least one seal (36) of the filter element sealing device (69) of the filter element (18) is disposed on a sleeve-like positioning element (32) which extends axially on the outside of the end body (28) with respect to the axis (20) and which at least partially contributes to forming the filter element idle opening (30).

6. The filter (10) according to one of the preceding claims, **characterized in that** the at least one seal (36) of the of the filter element (18) is arranged radially outside the sleeve-like positioning element (32) with respect to the axis (20).

7. The filter (10) according to one of the preceding claims, **characterized in that** the at least one sealing surface (68) of the discharge closure element (26) is directed axially with respect to the axis (20).

8. The filter (10) according to one of the preceding claims, **characterized in that** the at least one sealing surface (68) of the discharge closure element (26) is disposed radially inside or radially outside a centering element (66) relative to the axis (20), which centering element can cooperate with a positioning element (32) of the filter element (18).

9. The filter (10) according to one of the preceding claims, **characterized in that** radially outer discharge openings (60) closable or openable by means of a cover surface (70) of the drain closure element (26), so that a liquid can be discharged through radially outer discharge openings (60) at the bottom of a housing cover (14).

## Revendications

1. Filtre (10) à liquide, en particulier à huile ou à carburant, en particulier d'un moteur à combustion interne, en particulier d'un véhicule automobile, avec au moins un boîtier de filtre (12) dans lequel est disposé l'élément filtrant (18), l'élément filtrant (18) présentant au moins un orifice de marche à vide d'élément filtrant (30) et le boîtier de filtre (12) présentant une ouverture d'évacuation (60, 64) pour le liquide qui sont obturées par un élément de fermeture d'évacuation (26), l'élément filtrant (18) présentant au moins un milieu filtrant (22) qui entoure de manière continue en sens circonférentiel un espace intérieur d'élément (24) par rapport à un axe imaginaire (20) et qui est relié à un corps d'extrémité (28) sur au moins une face frontale axiale par rapport à l'axe (20), le corps d'extrémité (28) de l'élément filtrant (18) présentant un orifice de marche à vide d'élément filtrant (30) entourant l'axe (20) et reliée à l'espace intérieur d'élément (24), et au moins une surface étanche d'élément filtrant ou une surface de joint d'élément filtrant (38, 40, 68) d'un dispositif d'étanchéité d'élément filtrant (69) qui entoure de manière continue en sens circonférentiel l'orifice de marche à vide d'élément filtrant (30) et avec lequel l'orifice de marche à vide d'élément filtrant (30) peut être fermée lorsque le filtre (10) est assemblé, le dispositif d'étanchéité d'élément filtrant (69) présentant au moins un joint (36) continu en sens circonférentiel par rapport à l'axe (20) qui est fixé sur le côté de l'élément filtrant (18), et l'orifice de marche à vide d'élément filtrant (30) et l'ouverture d'évacuation (60, 64) étant obturées par un élément de fermeture d'évacuation (26), l'élément de fermeture d'évacuation (26) pour au moins une ouverture d'évacuation (60, 64) du boîtier de filtre (12) du filtre (10) présentant au moins une surface d'étanchéité (68) du dispositif d'étanchéité d'élément filtrant (69) destinée à fermer l'orifice de marche à vide d'élément filtrant(30) de l'élément filtrant (18) du filtre (10) qui entoure de manière continue en sens circonférentiel un axe imaginaire (20), l'élément de fermeture d'évacuation (26) pouvant être relié à l'élément filtrant (18) et/ou au boîtier de filtre (12) ou en être séparé par rapport à l'axe (20) au moyen d'un mouvement de rotation et/ou d'enfichage, **caractérisé en ce que** la surface d'étanchéité (68), au moins au nombre d'une, d'une face frontale axiale par rapport à l'axe (20) qui est ou peut être orientée vers l'espace intérieur du boîtier de filtre (12) pour fermer l'ouverture d'évacuation (60, 64), au moins au nombre d'une, est librement accessible dans la direction axiale.

2. Filtre (10) à liquide selon la revendication 1, **caractérisé en ce qu'**une extension axiale d'une section de séparation (62) est plus petite qu'une extension axiale d'un joint d'élément filtrant (36) à l'état détendu, la section de séparation (62) servant de butée en cas de compression axiale du joint d'élément filtrant (36), le diamètre intérieur de la section de séparation (62) étant supérieur au diamètre extérieur du joint d'élément filtrant (36).

3. Filtre (10) à liquide selon la revendication 1 ou 2, **caractérisé en ce qu'**un élément de positionnement (32) et l'élément de fermeture d'évacuation (26) sont disposés de manière à se chevaucher en sens axial à l'état monté, une zone de l'élément de fermeture d'évacuation (26) entourant une zone de l'élément de positionnement (32) ou une zone de l'élément de positionnement (32) entourant une zone de l'élément de fermeture d'évacuation (26).

4. Filtre (10) selon l'une quelconque des revendications précédentes, **caractérisé en ce que** le joint (36), au moins au nombre d'un, du dispositif d'étanchéité d'élément filtrant (69) de l'élément filtrant (18) a un effet étanche en sens axial par rapport à l'axe (20).

5. Filtre (10) selon l'une quelconque des revendications précédentes, **caractérisé en ce que** le joint (36), au moins au nombre d'un, du dispositif d'étanchéité d'élément filtrant (69) de l'élément filtrant (18) est disposé sur un élément de positionnement en forme de manchon (32) qui s'étend axialement sur la face extérieure du corps d'extrémité (28) par rapport à l'axe (20) et qui contribue au moins à former l'orifice de marche à vide d'élément filtrant (30).

6. Filtre (10) selon l'une quelconque des revendications précédentes, **caractérisé en ce qu'**au moins un joint (36) de l'élément filtrant (18) est disposé radialement à l'extérieur par rapport à l'axe (20) sur l'élément de positionnement en forme de manchon (32).

7. Filtre (10) selon l'une quelconque des revendications précédentes, **caractérisé en ce que** la surface d'étanchéité (68), au moins au nombre d'une, de l'élément de fermeture d'évacuation (26) est orientée axialement par rapport à l'axe (20).

8. Filtre (10) selon l'une quelconque des revendications précédentes, **caractérisé en ce que** la surface d'étanchéité (68), au moins au nombre d'une, de l'élément de fermeture d'évacuation (26) est disposée radialement à l'intérieur ou radialement à l'extérieur par rapport à l'axe (20) d'un élément de centrage (66), lequel peut interagir avec un élément de positionnement (32) de l'élément filtrant (18).

9. Filtre (10) selon l'une quelconque des revendications précédentes, **caractérisé en ce que** des ouvertures de sortie (60) radialement extérieures peuvent être fermées ou ouvertes au moyen d'une surface de recouvrement (70) de l'élément de fermeture d'évacuation (26), de sorte qu'un liquide puisse s'écouler par des ouvertures d'évacuation (60) radialement extérieures au fond d'un couvercle de boîtier (14).
